# EUROPEAN PATENT SPECIFICATION

(11) **EP 4 441 813 B1**
(45) Date of publication and mention of the grant of the patent: **24.12.2025**
(21) Application number: 22822460.6
(22) Date of filing: 25.11.2022
(51) Int. Cl.: H01M 4/62, H01M 4/04, H01M 4/13, H01M 4/139, H01M 10/052, H01M 4/02

(54) **BATTERY ELECTRODE AND METHOD OF MAKING THE SAME**
BATTERIEELEKTRODE UND VERFAHREN ZUR HERSTELLUNG DAVON
ÉLECTRODE DE BATTERIE ET SON PROCÉDÉ DE FABRICATION

(30) Priority: 29.11.2021 EP 21211090; 25.07.2022 EP 22186754
(43) Date of publication of application: 09.10.2024
(73) Proprietor: Syensqo Specialty Polymers Italy S.p.A., 20021 Bollate (MI) (IT)
(72) Inventor: MILLEFANTI, Stefano, 21049 Tradate (VA) (IT); MARRANI, Alessio, 23900 Lecco (IT); BISO, Maurizio, 20162 Milano (Mi) (IT); MAURI, Stefano, 20833 Giussano (IT); DEBORTOLI, Romain, 5660 Couvin (BE); GAUTHY, Fernand, 1780 Wemmel (BE); KADAM, Vijay, Vemali, Vadodara 390008 (IN); SHINGTE, Rahul, Vadodara, Gujarat 390024 (IN)
(74) Representative: Banfi, Gaia
(86) International application number: PCT/EP2022/083347
(87) International publication number: WO 2023/094623

(56) References cited:
- EP-A1- 2 579 369
- WO-A1-2021/023707
- US-A1- 2010 133 482
- US-A1- 2011 059 340
- US-A1- 2017 256 367

## Description

### Cross-reference to related applications

This application claims priority to European application number 21211090.2 filed on November 29, 2021 and to European application number 22186754.2 filed on July 15, 2022.

### Technical Field

The present invention relates to an electrode composition comprising PTFE and a low melting point fluororesin, to a method for its preparation and to its use for the manufacture of electrochemical cell components.

### Background Art

To date, the electrodes of a lithium secondary battery are mainly manufactured by a wet process that comprises preparing a slurry in which an electrode active material, additives and a binder are dispersed in a solvent or an aqueous medium, and processing the slurry in a way that forms an electrode film.

Dry electrode processes have been developed to reduce the time-consuming and costly drying procedures required by the aforementioned wet processes.

Typical dry processes use the fibrillation properties of certain polymers to provide a matrix for embedded conductive material. Some of the polymers in the family of fluoropolymers, such as polytetrafluoroethylene (PTFE), are particularly inert and stable in the common electrolyte solvents used in secondary batteries, even those using organic solvent at high working or storage temperatures. Thus, the stability of an electrode made using PTFE can be higher than those made with other binders.

For example, dry electrode preparation processes can include combining a PTFE binder with active electrode material in powder form, and calendering to form an electrode film. However, although PTFE has good adhesiveness to the electrode active material, it has difficulty in adhesiveness to the current collector.

Known in the art are methods to improve the adhesiveness to the current collector and electrode active material of PTFE, by using PTFE and tetrafluoroethylene/hexafluoropropylene copolymer (FEP) in combination as a binder, achieving a material having the melting point of FEP (240 to 270 °C) or higher (JP2000149954A). However, in order to heat to a temperature equal to or higher than the melting point of FEP, specifically, 280 °C or higher, a special heat treatment device is required to provide an electrode film, and it is disadvantageous in terms of energy.

An object of the present invention is to provide an electrode which can secure sufficient adhesive strength and that can be prepared by an efficient process.

### Summary of invention

The Applicant has now found that the addition of certain fluorine-containing thermoplastics is particularly effective in ensuring improved adhesion to PTFE when used as binders for electrodes for secondary batteries.

It is thus hereby provided a binder composition [binder (B)] for use in the preparation of electrodes for electrochemical devices, characterized by comprising:
a. a polytetrafluoroethylene (PTFE); and
b. a low melting point VDF-based fluororesin [polymer (A)] having a melting point of less than 220 °C, said polymer (A) comprising:
   - at least 50% by moles of recurring units derived from VDF, with respect to all recurring units of said polymer (A), and
   - recurring units derived from at least one comonomer (CM), said comonomer (CM) being selected from a hydrophilic (meth)acrylic comonomer [comonomer (MA)] and a fluorinated comonomer [comonomer (F)] selected from the group consisting of:
      (i) tetrafluoroethylene (TFE);
      (ii) chloro- and/or bromo- and/or iodo-C₂-C₆ fluoroolefins such as chlorotrifluoroethylene (CTFE);
      (iii) (per)fluoroalkylvinylethers of formula CF₂=CFOR_{f1}, wherein R_{f1} is a C₁-C₆ fluoro- or perfluoroalkyl group, e.g. -CF₃, -C₂F₅, -C₃F₇; and
      (iv) hexafluoropropylene (HFP).

In another aspect the present invention provides an electrode-forming composition [composition (C)] for use in the preparation of electrodes for electrochemical devices, characterized by comprising:
a) at least one electrode active material (AM);
b) a binder (B) as above defined; and
c) optionally, at least one conductive agent.

The applicant has surprisingly found that the processability of the binder (B) make it suitable for the preparation of electrodes by dry processes or extrusion at low temperatures, thus providing electrodes by a very efficient process.

In another aspect the present invention thus provides a process for manufacturing an electrode [electrode (E)] for electrochemical cell, said process comprising:
- A) combining a polytetrafluoroethylene (PTFE) and a low melting point VDF-based fluororesin [polymer (A)] as above defined to provide a binder (B);
- B) dry milling the at least one electrode active material (AM), the binder (B) as above defined, and optionally, at least one conductive agent in the absence of solvent;
- C) feeding the powdered dry mixture obtained in step B) to a compactor to form a self-supporting dry film; and
- D) applying the dry film to an electrically conductive substrate to form the electrode.

In another aspect, the present invention provides an electrode (E) for a secondary battery obtainable by the process as above defined.

In a further aspect, the present invention relates to an electrochemical device, such as a secondary battery or a capacitor, comprising at least one electrode (E) as defined above.

### Description of embodiments

In the context of the present invention, the term "weight percent" (wt %) indicates the content of a specific component in a mixture, calculated as the ratio between the weight of the component and the total weight of the mixture. When referred to the recurring units derived from a certain monomer in a polymer/copolymer, weight percent (wt %) indicates the ratio between the weight of the recurring units of such monomer over the total weight of the polymer/copolymer. When referred to the total solid content of a liquid composition, weight percent (wt %) indicates the ratio between the weight of all non-volatile ingredients in the liquid.

As used herein, the terms "adheres" and "adhesion" indicate that two layers are permanently attached to each other via their surfaces of contact.

By the term "electrochemical device", it is hereby intended to denote an electrochemical cell/assembly comprising a positive electrode, a negative electrode and a liquid electrolyte, wherein a monolayer or multilayer separator is in contact to at least one surface of one of the said electrodes. Non-limitative examples of suitable electrochemical devices include, notably, secondary batteries, especially, alkaline or an alkaline- earth secondary batteries such as lithium ion batteries, lead-acid batteries, and capacitors, especially lithium ion-based capacitors and electric double layer capacitors (supercapacitors).Non-limitative examples of electrochemical cells include, notably, batteries, preferably secondary batteries, and electric double layer capacitors.

For the purpose of the present invention, by "secondary battery" it is intended to denote a rechargeable battery. Non-limitative examples of secondary batteries include, notably, alkaline or alkaline-earth secondary batteries.

In the context of the present invention, the term "PTFE" indicates a polymer obtained from the polymerization of tetrafluoroethylene (TFE).

It is understood, however, that the PTFE polymer may also comprise minor amounts of one or more co-monomers such as, but not limited to, hexafluoropropylene, perfluoro(methyl vinyl ether), perfluoro(propyl vinyl ether), perfluoro-(2,2- dimethyl-l,3-dioxole), and the like, provided, however that the latter do not significantly adversely affect the unique properties of the tetrafluoroethylene homopolymer, such as thermal and chemical stability. Preferably, the amount of such co-monomer does not exceed about 3 % by moles, and more preferably less than about 1% by moles; particularly preferred is a co-monomer content of less than 0.5 % by moles. In the case that the overall co-monomer content is greater than 0.5 % by moles, it is preferred that the amount of the perfluoro(alkyl vinylether) co-monomer is less than about 0.5 % by moles. Most preferred are PTFE homopolymers.

The PTFE suitable for use in the preparation of the binder (B) of the present invention can be in the form of powder or in the form of latex.

PTFE in the form of powder may be obtained by coagulating PTFE lattices by means of cryogenic coagulation or by electrolytic coagulation with the addition of an electrolyte. See, for example, US 6790932. Preferred examples of electrolytes are:
- Aluminum sulphate (Al₂(SO₄)₃), in concentration of 2g/l calculated on amount of water in the coagulation vessel,
- Ammonium carbonate ((NH₄) ₂CO₃), in concentration of 8g/l calculated on amount of water in the coagulation vessel, or
- Nitric acid (HNO₃), 25ml of a solution at 65% calculated on amount of water in the coagulation vessel.

Alternatively, the powder of PTFE may be obtained from PTFE lattices in the form of gels by means of coagulation with the electrolytes mentioned above. The gels may be obtained according to patents US 6790932 and US 6780966.

After the coagulation occurred, the polymer is washed at room temperature with demineralized water. After coagulation and washing, the PTFE powder obtained therein is then dried.

The PTFE lattices are generally obtained by dispersion or emulsion polymerization.

The PTFE in the form of powder generally has a particle size of between 1 and 1600 microns, preferably from 100 to 800 microns and more preferably 400-700 microns.

Particle size can be expressed in terms of D50, which is the corresponding particle size when the cumulative percentage reaches 50%. D50 is also called as the median particle diameter or median particle size. For example, for a powder sample with D50 = 5µm, it means 50% of particles are larger than 5µm and 50% particles are smaller than 5µm.

The term "fluororesin" is hereby intended to a resin in which at least one hydrogen atom bonded to a carbon atom constituting a repeating unit of a polymer chain is substituted with a fluorine atom or an organic group having a fluorine atom.

Polymer (A) is preferably a semi-crystalline fluororesin.

The term "semi-crystalline" is hereby intended to denote a polymer (A) having a heat of fusion of more than 1 J/g when measured by Differential Scanning Calorimetry (DSC) at a heating rate of 10°C/min, according to ASTM D 3418, more preferably of at least 8 J/g.

Polymer (A) comprises at least 50% by moles, preferably at least 60% by moles, more preferably at least 70% by moles of recurring units derived from VDF with respect to all recurring units of said polymer (A).

Polymer (A) may comprise recurring units derived from at least one hydrophilic (meth)acrylic comonomer (MA), wherein comonomer (MA) is preferably a compound of formula: 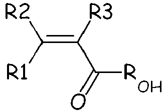 wherein each of R1, R2, R3, equal or different from each other, is independently an hydrogen atom or a C₁-C₃ hydrocarbon group, and R_{OH} is a hydroxyl group or a C₁-C₅ hydrocarbon moiety comprising at least one hydroxyl group.

The term "at least one hydrophilic (meth)acrylic comonomer (MA)" is understood to mean that the polymer (A) may comprise recurring units derived from one or more than one hydrophilic (meth)acrylic comonomer (MA) as above described. In the rest of the text, the expressions "hydrophilic (meth)acrylic comonomer (MA)" and "comonomer (MA)" are understood, for the purposes of the present invention, both in the plural and the singular, that is to say that they denote both one or more than one hydrophilic (meth)acrylic comonomer (MA).

The hydrophilic (meth)acrylic comonomer (MA) preferably complies with formula: 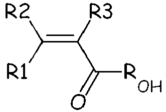 wherein each of R1, R2, R_{OH} have the meanings as above defined, and R3 is hydrogen; more preferably, each of R1, R2, R3 are hydrogen, while R_{OH} has the same meaning as above detailed.

Non limitative examples of hydrophilic (meth)acrylic comonomers (MA) are notably acrylic acid, methacrylic acid, hydroxyethyl (meth)acrylate, hydroxypropyl(meth)acrylate; hydroxyethylhexyl(meth)acrylates.

The comonomer (MA) is more preferably selected from the group consisting of:
- hydroxyethylacrylate (HEA) of formula: 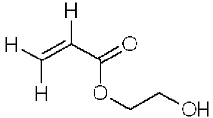
- 2-hydroxypropyl acrylate (HPA) of either of formulae: 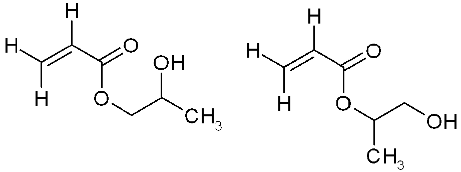
- acrylic acid (AA) of formula: 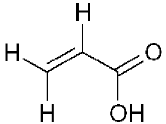
- and mixtures thereof.

More preferably, the comonomer (MA) is AA and/or HEA, even more preferably is AA.

Determination of the amount of comonomers recurring units in polymer (A) can be performed by any suitable method, such as NMR methods. With regard to monomer (MA), mention can be notably made of acid-base titration methods, well suited e.g. for the determination of the acrylic acid content, of NMR methods, adequate for the quantification of (MA) comonomers comprising aliphatic hydrogens in side chains (e.g. HPA, HEA), of weight balance based on total fed (MA) comonomer and unreacted residual (MA) comonomer during polymer (A) manufacture and of IR methods.

Should at least one hydrophilic (meth)acrylic comonomer (MA) be present, the polymer (A) comprises typically from 0.05 to 10.0 % by moles, with respect to the total moles of recurring units of polymer (A).

Polymer (A) comprising at least one hydrophilic (meth)acrylic comonomer (MA) may be prepared according to WO 2008/129041.

The polymer (A) may comprise recurring units derived from at least one [comonomer (F)], different from VDF and from comonomer (MA), and selected from the group consisting of:
(i) tetrafluoroethylene (TFE);
(ii) chloro- and/or bromo- and/or iodo-C₂-C₆ fluoroolefins such as chlorotrifluoroethylene (CTFE) and 1,2-dichloro-1,2-difluoroethylene;
(iii) (per)fluoroalkylvinylethers of formula CF₂=CFOR_{f1}, wherein R_{f1} is a C₁-C₆ fluoro- or perfluoroalkyl group, e.g. -CF₃, -C₂F₅, -C₃F₇; and
(iv) hexafluoropropylene (HFP).

Most preferred fluorinated comonomers (F) are tetrafluoroethylene (TFE), chlorotrifluoroethylene (CTFE), perfluoromethyl vinyl ether (PMVE) hexafluoropropylene (HFP).

The at least one comonomer (F) may be present in polymer (A) in an amount typically of from 0.05% to 30.0% by moles with respect to the total moles of recurring units of polymer (A).

According to certain embodiments, polymer (A) consists essentially of recurring units derived from VDF and from monomer (MA). According to said embodiments, the monomer (MA) is preferably AA, and polymer (A) is a VDF-AA copolymer.

According to other embodiments, polymer (A) consists essentially of recurring units derived from VDF and from at least one comonomer (F). According to said embodiments, comonomer (F) is preferably selected from CTFE, TFE and MVE. Preferred polymers (A) according to said embodiments are VDF-CTFE copolymers, VDF-TFE copolymers, VDF-HFP copolymers or VDF/TFE/PMVE terpolymers.

Polymer (A) may still comprise other moieties such as defects, end-groups and the like, which do not affect nor impair its physico-chemical properties.

The polymer (A) may be obtained by polymerization of a VDF monomer and optionally at least one comonomer (F), either in suspension in organic medium, or in aqueous emulsion, according to the procedures known in literature.

The procedure for preparing the polymer (A) comprises polymerizing in an aqueous medium in the presence of a radical initiator the vinylidene fluoride (VDF), and optionally at least one comonomer (F), optionally in the presence of a chain transfer agent and of a dispersing agent in a reaction vessel.

Generally, the process of the invention is carried out at a temperature of at least 40°C, preferably of at least 50°C, more preferably of at least 60°C.

When the polymerization is carried out in suspension, polymer (A) is typically provided in form of powder.

When the polymerization to obtain polymer (A) is carried out in emulsion, polymer (A) is typically provided in the form of an aqueous dispersion (D), which may be used as directly obtained by the emulsion polymerization or after a concentration step. Preferably, the solid content of polymer (A) in dispersion (D) is in the range comprised between 20 and 50% by weight.

Polymer (A) obtained by emulsion polymerization can be isolated from the aqueous dispersion (D) by concentration and/or coagulation of the dispersion and obtained in powder form by subsequent drying.

Polymer (A) obtained by emulsion polymerization can also be isolated from the aqueous dispersion (D) by spray drying. Spray drying is a process by which a liquid material (solution or dispersion) is vaporized and a dried powder is generated by spraying the liquid feed into a hot drying medium (dry hot air) obtaining small powder particle size measured by PSD (Particle Size Distribution).

The polymer (A) of the invention is preferably obtainable by emulsion polymerization in an aqueous polymerization medium, according to the procedures described, for example, in WO 2018/189090, in WO 2018/189091 and WO 2018/189092.

In one embodiment of the invention, polymer (A) is advantageously obtained by emulsion polymerization by a method being performed in the absence of any fluorosurfactant, for example according to the procedure described in WO 2019/076901.

The melting temperature of polymer (A) may be determined from a DSC curve obtained by differential scanning calorimetry (hereinafter, also referred to as DSC). In the case where the DSC curve shows a plurality of melting peaks (endothermic peaks), the melting temperature (Tm) is determined on the basis of the peak having the largest peak area.

It is essential that the melting temperature of polymer (A) is below 220°C.

By using a VDF-based fluororesin having a higher melting temperature, the adhesion of the binder (B) to the metal collector cannot be obtained, and the risk of delamination is high.

Binder (B) may be obtained by mixing the PTFE and the polymer (A) both in the powder form or through mixing of a PTFE latex with a polymer (A) latex, followed by co-coagulation by cryogenic or electrolytic procedure and isolation.

In order to obtain the desired polymer ratio in the blend, the dry content of the PTFE latex and/or the polymer (A) latex may be evaluated by drying in a thermobalance 50 grams of polymeric latex at 200°C.

Generally the weight ratio PTFE/polymer (A) will be comprised between 95/5 wt/wt to 30/70 wt/wt. The skilled in the art will select most appropriate weight ratio in view of target final properties of the binder (B).

The applicant has surprisingly found that an amount of polymer (A) added to PTFE does not affect the ability to fibrillate PTFE.

In another aspect the present invention provides an electrode-forming composition [composition (C)] for use in the preparation of electrodes for electrochemical devices, characterized by comprising:
a) at least one electrode active material (AM);
b) a binder (B) as above defined; and
c) optionally, at least one conductive agent.

The amount of binder (B) which may be used in the electrode-forming composition (C) is subject to various factors. One such factor is the surface area and amount of the active material, and the surface area and amount of any electroconductivity-imparting additive which are added to the electrode-forming composition. These factors are believed to be important because the binder particles provide bridges between the conductor particles and conductive material particles, keeping them in contact.

The electrode forming composition [composition (C)] of the present invention includes one or more electrode active material (AM). For the purpose of the present invention, the term "electrode active material" is intended to denote a compound that is able to incorporate or insert into its structure, and substantially release therefrom, alkaline or alkaline-earth metal ions during the charging phase and the discharging phase of an electrochemical cell. The electrode active material is preferably able to incorporate or insert and release lithium ions.

The nature of the electrode active material in the electrode forming composition (C) of the invention depends on whether said composition is used in the manufacture of a negative electrode (anode) or a positive electrode (cathode).

In the case of forming a positive electrode for a Lithium-ion secondary battery, the electrode active material may comprise a composite metal chalcogenide of formula LiMQ₂, wherein M is at least one metal selected from transition metals such as Co, Ni, Fe, Mn, Cr and V and Q is a chalcogen such as O or S. Among these, it is preferred to use a lithium-based composite metal oxide of formula LiMO₂, wherein M is the same as defined above. Preferred examples thereof may include LiCoO₂, LiNiO₂, LiNiₓCo₁₋ₓO₂ (0 < x < 1) and spinel-structured LiMn₂O₄.

As an alternative, still in the case of forming a positive electrode for a Lithium-ion secondary battery, the electrode active material may comprise a lithiated or partially lithiated transition metal oxyanion-based electro-active material of formula M₁M₂(JO₄)_{f}E_{1-f}, wherein M₁ is lithium, which may be partially substituted by another alkali metal representing less than 20% of the M₁ metals, M₂ is a transition metal at the oxidation level of +2 selected from Fe, Mn, Ni or mixtures thereof, which may be partially substituted by one or more additional metals at oxidation levels between +1 and +5 and representing less than 35% of the M₂ metals, including 0, JO₄ is any oxyanion wherein J is either P, S, V, Si, Nb, Mo or a combination thereof, E is a fluoride, hydroxide or chloride anion, f is the molar fraction of the JO₄ oxyanion, generally comprised between 0.75 and 1.

The M₁M₂(JO₄)_{f}E_{1-f} electro-active material as defined above is preferably phosphate-based and may have an ordered or modified olivine structure.

More preferably, the electrode active material in the case of forming a positive electrode has formula Li₃₋ₓM'_{y}M"_{2-y}(JO₄)₃ wherein 0≤x≤3, 0≤y≤2, M' and M" are the same or different metals, at least one of which being a transition metal, JO₄ is preferably PO₄ which may be partially substituted with another oxyanion, wherein J is either S, V, Si, Nb, Mo or a combination thereof. Still more preferably, the electrode active material is a phosphate-based electro-active material of formula Li(FeₓMn₁₋ₓ)PO₄ wherein 0≤x≤1, wherein x is preferably 1 (that is to say, lithium iron phosphate of formula LiFePO₄).

In the case of forming a negative electrode for a Lithium-ion secondary battery, the electrode active material may preferably comprise one or more carbon-based materials and/or one or more silicon-based materials.

In some embodiments, the carbon-based materials may be selected from graphite, such as natural or artificial graphite, graphene, or carbon black. These materials may be used alone or as a mixture of two or more thereof.

The carbon-based material is preferably graphite.

The silicon-based compound may be one or more selected from the group consisting of chlorosilane, alkoxysilane, aminosilane, fluoroalkylsilane, silicon, silicon chloride, silicon carbide and silicon oxide.

More particularly, the silicon-based compound may be silicon oxide or silicon carbide.

When present in the electrode active material, the silicon-based compounds are comprised in an amount ranging from 1 to 60 % by weight, preferably from 5 to 30 % by weight with respect to the total weight of the electro active compounds.

One or more optional electroconductivity-imparting additives may be added in order to improve the conductivity of a resulting electrode made from the composition of the present invention. Conducting agents for batteries are known in the art.

Examples thereof may include: carbonaceous materials, such as carbon black, graphite fine powder, carbon nanotubes, graphene, or fiber, or fine powder or fibers of metals such as nickel or aluminum. The optional conductive agent is preferably carbon black. Carbon black is available, for example, under the brand names, Super P^{®} or Ketjenblack^{®}.

When present, the conductive agent is different from the carbon-based material described above.

The amount of optional conductive agent is preferably from 0 to 30 wt. % of the total solids in the electrode forming composition. In particular, for cathode forming compositions the optional conductive agent is typically from 0 wt. % to 10 wt. %, more preferably from 0 wt. % to 5 wt. % of the total amount of the solids within the composition.

For anode forming compositions which are free from silicon based electro active compounds the optional conductive agent is typically from 0 wt. % to 5 wt. %, more preferably from 0 wt. % to 2 wt.% of the total amount of the solids within the composition, while for anode forming compositions comprising silicon based electro active compounds it has been found to be beneficial to introduce a larger amount of optional conductive agent, typically from 0.5 to 30 wt. % of the total amount of the solids within the composition.

The electrode-forming composition (C) may be prepared by thoroughly mixing the at least one electrode active material (AM), the binder (B) and optionally, the at least one conductive agent.

Mixing with high shear forces involves the fibrillization of the binder particles to produce fibrils that eventually form a matrix or lattice for supporting the resulting composition of matter. The resulting dough-like material may be calendared many times to produce a conductive film of desired thickness and density. The high shear forces can be provided by subjecting the mixture to an extruder.

The electrode-forming composition (C) of the invention can be used in a process for the manufacture of an electrode [electrode (E)], said process comprising:
- A) combining a polytetrafluoroethylene (PTFE) and a low melting point VDF-based fluororesin [polymer (A)] as above defined to provide a binder (B);
- B) dry mixing the at least one electrode active material (AM), the binder (B) as above defined, and optionally, at least one conductive agent in the absence of solvent;
- C) feeding the powdered dry mixture obtained in step B) to a compactor to form a self-supporting dry film; and
- D) applying the dry film to an electrically conductive substrate to form the electrode.

In step B), mixing electrode active material (AM), the binder (B) as above defined, and optionally, at least one conductive agent is performed by dryblending these ingredients without the addition of any solvents, liquids, processing aids, or the like to the particle mixture. Dry-mixing may be carried out, for example, in a mill, mixer or blender (such as a V-blender equipped with a high intensity mixing bar, or other alternative equipment as described further below), until a uniform dry mixture is formed. Those skilled in the art will identify, after perusal of this document, that blending time can vary based on batch size, materials, particle size, densities, as well as other properties, and yet remain within the scope hereof.

In step C) of the process of the invention, the powdered dry mixture obtained in step B) is subjected to mechanical compaction step to provide a self-supporting dry film.

The compacting of the dry mixture obtained in step B) can take place as a mechanical compaction, for example by means of a roller compactor or a tablet press, but it can also take place as rolling, build-up or by any other technique suitable for this purpose.

The mechanical compaction step may be associated to a thermal consolidation step. The combination of an applied pressure and a heat treatment makes thermal consolidation possible at lower temperatures than if it were done alone.

In one embodiment, the mechanical compaction step is carried out by compression, suitably by compressing the dry mixture obtained in step B) between two metal foils. Preferably, the mechanical compaction step is done by application of a compression pressure between 5 and 50 MPa, and preferably between 10 and 30 MPa.

The compaction step is conveniently carried out at a temperature not exceeding 200 °C, preferably at a temperature lower than 180 °C.

In step D), the dry film obtained in step C) is applied onto an electrically conductive substrate to form the electrode.

The sheet of substrate material may comprise a metal foil, an aluminum foil in particular.

Thanks to the improved adhesion of the binder (B), the dry film obtained in step C) can be applied onto the electrically conductive substrate without the need for any primer or adhesive layer.

The electrode (E) of the invention is particularly suitable for use in electrochemical devices, in particular in secondary batteries.

In one aspect, the present invention provides an electrochemical device being a secondary battery comprising:
- a positive electrode and a negative electrode,
wherein at least one of the positive electrode and the negative electrode is the electrode (E) according to the present invention.

Preferably, the electrochemical device is a secondary battery comprising:
- a positive electrode and a negative electrode,
wherein the positive electrode is the electrode (E) according to the present invention.

The secondary battery of the invention is preferably an alkaline or an alkaline-earth secondary battery.

The secondary battery of the invention is more preferably a lithium-ion secondary battery.

An electrochemical device according to the present invention can be prepared by standard methods known to a person skilled in the art.

The invention will be now described with reference to the following examples, whose purpose is merely illustrative and not intended to limit scope of the invention.

### EXAMPLES

### RAW MATERIALS

Polymer (A-1): VDF-AA (0.6% by moles) polymer having an intrinsic
viscosity of 0.38 I/g in DMF at 25°C and a T_{2f} of 164°C;
Polymer (A-6): VDF-HFP (15% by weight) copolymer commercially available as Solef^{®} 21510 from Solvay Specialty Polymers S.p.A.;
Polymer (A-8): VDF-CTFE copolymer commercially available as Solef^{®} 32008 from Solvay Specialty Polymers S.p.A.;
PTFE 1: PTFE homopolymer powder having specific gravity, measured according to ASTM D792, of 2160 and having rheometric pressure, measured according to ASTM D4895, of 9.50 MPa;
PTFE 2: PTFE homopolymer powder having specific gravity, measured according to ASTM D792, of 2.18 and having rheometric pressure, measured according to ASTM D4895, of 8.00 MPa;
Lithium Iron Phosphate, LFP, available as Life Power from Johnson Matthey;
Carbon black, available as SC65 available from Imerys S.A.;
Galden HT80 available from Solvay Materials;
Electrolyte mixture of LiPF6 1M in EC/DMC 1/1 v/v from Solvionic.

### Preparation of Polymer (A-2): VDF/CTFE copolymer

In an AISI 316 steel vertical autoclave equipped with baffles, with stirrer working at 550 rpm, 1.3 l of demineralized water were introduced. Then the temperature was brought to a reaction temperature of 75°C; once this reached, VDF to generate a pressure variation of 4 abs bars was introduced. Next, pure gas mixture of VDF 90% and CTFE 10% in molar amount, was added via a compressor, until reaching a pressure of 20 abs bars. Then, 45 ml of solution of ammonium persulfate (APS) in demineralized water at a concentration of 3% by weight were fed. The polymerization pressure was maintained constant by feeding the above mentioned mixture; when 300 g of the gas were fed, the reactor was cooled at room temperature and then stripped. The polymer (A-2) with 92 % by moles of VDF and 8 % by moles of CTFE was discharged in latex form and degassed.

### Preparation of Polymer (A-3): VDF/CTFE copolymer

Same procedure as in preparation of polymer (A-2) was followed, but reactor of 5 l of volume, 3.4 l of demineralized water, 25 g of a solution of c-C₆O₄ ammonium salt dissolved into demineralized water at a concentration of 35%, 25 ml of solution of ammonium persulfate (APS) in demineralized water at a concentration of 3% by weight were used, and 500 g of a mixture of VDF 90% and CTFE: 10% by molar amount, were fed in the reactor. The polymer (A-3) with 90.4 % by moles of VDF and 9.6 % by moles of CTFE was discharged in latex form and degassed.

### Preparation of Polymer (A-4): VDF/TFE/PMVE terpolymer

Same procedure as in preparation of polymer (A-2) was followed, but stirrer at 650 rpm, 1.4 l of demineralized water, temperature of 80°C, introducing VDF to generate a pressure variation of 8 bars, introducing MVE (Methyl vinyl ether) to generate a pressure variation of 6 bars, 10 g of a solution of c-C₆O₄ ammonium salt dissolved into demineralized water at a concentration of 35 %, 15 ml of solution of ammonium persulfate (APS) in demineralized water at a concentration of 2% in weight. Next, gaseous mixture of VDF/TFE with molar ratio of 90%/10% was added via a compressor, until reaching a pressure of 20 abs bars. Once the polymerization was started, 150 grams of a mixture of TFE 10% and VDF 90% by molar amount, are fed in the reactor. The polymer (A-4) with 81.1% by moles of VDF, 10.3 % by moles of TFE and 8.6 % by moles of PMVE was discharged in latex form and degassed.

### Preparation of Polymer (A-5): VDF/TFE copolymer

Same procedure as in the example (A-2) was followed, but using a 5 liters reactor, introducing 3.5 liters of demineralized water, introducing VDF to generate a pressure variation of 7.8 bars, 10 ml of solution of Ammonium persulfate (APS) in demineralized water at a concentration of 3 % in weight, 500 grams of a mixture of TFE 25% and VDF: 75% by molar amount, are fed in the reactor.

### Preparation of Polymer (A-7): VDF/CTFE copolymer. Spray Drying

Same procedure as in preparation of polymer (A-2) was followed, but isolation of the polymer was made by a spray dryer.

### Preparation of Polymer (C-1): VDF/TFE copolymer - Comparative

Same procedure as in preparation of polymer (A-4) was followed, but using a 5 liters reactor, introducing 3.5 liters of demineralized water, introducing VDF to generate a pressure variation of 8 bars, 30 g of a solution of c-C₆O₄ ammonium salt dissolved into demineralized water in a concentration of 35%, 20 ml of solution of ammonium persulfate (APS) in demineralized water at a concentration of 3% by weight, 500 g of a mixture of TFE 80% and VDF: 20% by molar amount, are fed in the reactor. The polymer (C-1) with 31 % by moles of VDF and 69 % by moles of TFE was discharged in latex form and degassed.

### Polymer post treatment

The polymers (A-2), (A-3), (A-4), (A-5) and (C-1) in powder form were obtained from the corresponding latex by cryogenic coagulation or by electrolytic coagulation using:
- aluminum sulphate (Al₂(SO₄)₃) at concentration of 2 g/l calculated on amount of water in the coagulation vessel,
- ammonium carbonate ((NH₄)₂CO₃) at concentration of 8 g/l calculated on amount of water in the coagulation vessel, or
- nitric acid (HNO₃), 25 ml of a solution at 65% calculated on amount of water in the coagulation vessel.

After the coagulation occurred, each polymer was washed at room temperature with demineralized water. After coagulation and washing, the obtained powders were then dried 24 hours in a vented oven at a temperature of at least 80°C and less than 120°C.

Melting temperatures and enthalpy of fusion (ΔH) of polymers (A-1) to (A-7) and (C-1), characterized by DSC according to ASTM D3418 standard, are reported in Table 1.

**Table1**

| **Polymer additive** | **Tm (°C)** | **ΔH (J/g)** |
|---|---|---|
| Polymer A-1 | 163.4 | 48.4 |
| Polymer A-2 | 121.6 | 29.9 |
| Polymer A-3 | 118 | 18 |
| Polymer A-4 | 108 | 19 |
| Polymer A-5 | 132 | 30 |
| Polymer A-6 | 135 | 23 |
| Polymer A-7 | 121.6 | 29.9 |
| Polymer A-8 | 168 | 17 |
| Polymer C-1 | 282.2 | 23.1 |

### Polymer mixing

The fluororesin and PTFE were mixed either in the powder form or through latex mixing followed by co-coagulation according to the procedure reported in the Post-treatment section above. Details of the compositions are reported in Table 2.

### Lamination with Metal substrate

Films of comprising compositions of any of the polymers (A-1) to (A-6) and (C-1) polymer with either PTFE-1 or PTFE-2 were obtained by compressing the powder compositions between two aluminum foils. Lamination process occurred at a temperature lower than 180°C and at a pressure of 160 Bars. The material was kept in a heating for 6 minutes than was pressed at the operative pressure running 6 degassing steps (manually by releasing the pressure) for a total of 180 seconds. The samples were then cooled at room temperature by a cold press. The samples were kept in a cooling press at the same pressure as for the first step for a time period comprised between 4 to 6 minutes.

### Adhesion assessment and measure

Adhesion assessment and measurements were carried out between the film obtained as above specified and the aluminum foil by following ASTM D 1876 on the 3 layer structure obtained after the lamination (metal foil/ film/metal foil). The adhesion values are reported in Table 2.

**Table 2**

| **PTFE** | **polymer** | **% Additive in blend in PTFE** | **Temperature of adhesion test** | **Peeling streght (N/Cm)** | **Max load (N)** |
|---|---|---|---|---|---|
| PTFE-2 | polymer (A-3) | 50 | 125 | 0.5 ± 0.1 | 1.3 ± 0.5 |
| PTFE-2 | polymer (A-3) | 50 | 150 | 0.8 ± 0.2 | 2.5 ± 1.0 |
| PTFE-2 | polymer (A-4) | 50 | 180 | 1.2 ± 0.5 | 2.8 ± 1.3 |
| PTFE-2 | polymer (A-3) | 25 | 150 | 0.6 ± 0.1 | 1.5 ± 0.5 |
| PTFE-1 | polymer (A-3) | 50 (co-coagulus)* | 180 | 1.0 ± 0.1 | 2.4 ± 0.2 |
| PTFE-1 | polymer (A-2) | 50 (co-coagulus)* | 180 | 0.7 ± 0.3 | 2.1 ± 0.0 |
| PTFE-2 | polymer (A-1) | 50 | 180 | 0.7 +/- 0.2 | 1.4 +/- 0.4 |
| PTFE-2 | polymer (A-1) | 25 | 180 | 0.2 +/- 0.0 | 0.9 +/- 0.2 |
| PTFE-1 | Polymer (A-5) | 10 | 180 | 0,3 ± 0.1 | 0,5 ± 0.2 |
| PTFE-1 | polymer (A-4) | 50 | 180 | 3.1 ± 0.9 | 6.6 ± 0.2 |
| PTFE-1 | polymer (A-6) | 10 | 180 | 0.2 ± 0.0 | 0.3 ± 0.0 |
| PTFE-1 | Polymer C-1 | 50 | 180 | No adhesion | No adhesion |

| | | | | | |
|---|---|---|---|---|---|
| *Dry content of latex has been evaluated by drying in a thermobalance 50 g of polymeric latex at 200°C, in order to obtain the desired polymer ratio in the blend. | | | | | |

No adhesion was observed with PTFE-1 and PTFE-2 powders when employed alone in the preparation of films by compression between two aluminum foils.

### Particle size of polymer (A-2) and (A-7)

Particle size distribution (PSD) of polymers (A-2) and (A-7) was measured using a Laser Diffraction Beckman Coulter LS 13320 with attachment for dry specimens according to ISO 13-320:2020. Results are expressed as D50 in Table 3.

**Table 3**

| **Sample** | **Isolation** | **Particle Size (d50) [microns] / STD deviation** |
|---|---|---|
| polymer (A-2) | Cryo coagulation | 335 / 32 |
| polymer (A-7) | Spray drier | 17.7 / 0.1 |

### Processability

Processability of the materials was verified using Capillary Rheometer (Goettefert Rheograph 2003) employing a Die (L/D 10, diameter 1mm, run in angle 20°) with shear rate of 10 s-1 and 100 s-1 and temperature of 180°C.

The Applicant has surprisingly found that the binder composition according to the present invention can be suitably processed at a temperature well below the melting point of PTFE, thus allowing to obtain extrudates of the binder despite the presence of amounts of low melting point VDF-based fluororesin additives.

### Example 1: electrode preparation: composition of polymer (A-2) and PTFE-1 ratio 20/80

A dry mixture of 1.8 g of LFP and 0.1 g of SC65 was prepared by grinding for 5 minutes the two powders in a ceramic mortar with a pestle.

1 ml of Galden HT80 was added to the powder mixture and the composite mixed in a Vortex mixer at 20000 rpm for 0.5 minutes. A homogeneous paste was obtained.

0.02 g of polymer (F-2) and 0.08 g of PTFE-1 were added to the homogeneous paste and the mixture mixed in a Vortex mixer at 16000 rpm for 0.5 minutes. A homogeneous composite was obtained.

The composite was then mixed for additional 5 minutes in a ceramic mortar with a pestle to fibrillate the polymer.

The composite was finally pressed in a flat press at 24 ton for 5 minutes to obtain a tablet with diameter 20 mm and thickness 0.9 mm.

The procedure was repeated to prepare three tablets.

The tablets were dried in a vacuum oven (Buchi) at 90°C for 2 h under vacuum to obtain the electrode composition.

The resulting positive electrode had the following composition: 90 wt.% of LFP, 1 wt.% of polymer (A-2), 4% PTFE-1 and 5 wt. % of carbon black. **Electrode EC1** was thus obtained.

### Comparative Example 1: electrode preparation with PTFE-1

A dry mixture of 1.8 g of LFP and 0.1 g of SC65 was prepared by grinding for 2 minutes the two powders in a ceramic mortar with a pestle.

1 ml of Galden HT80 was added to the powder mixture and the composite mixed in a Vortex mixer at 20000 rpm for 0.5 minutes. A homogeneous paste was obtained.

0.1 g of polymer PTFE-1 was added to the homogeneous paste and the mixture mixed in a Vortex mixer at at 16000 rpm for 0.5 minutes. A homogeneous composite was obtained.

The composite was then mixed for additional 5 minutes in a ceramic mortar with a pestle to fibrillate the polymer.

The composite was finally pressed in a flat press at 24 ton for 5 minutes to obtain a tablet with diameter 20 mm and thickness 0.9 mm.

The procedure was repeated to prepare three tablets.

The tablets were dried in a vacuum oven (Buchi) at 90°C for 2 h under vacuum to obtain the electrode composition.

The resulting positive electrode had the following composition: 90 wt.% of LFP, 5 wt.% of polymer PTFE-1 and 5 wt. % of carbon black. **Electrode CE1** was thus obtained.

### Electrical resistance measurement

The electrical resistance measure of EC1 and CE1 was done in an EICel between two stainless steel plates (18 mm diameter) by applying a perturbation of 10 mV rms at frequency from 1 Hz to 200 kHz recording 10 points per decade. The result of electrical resistance was taken from the intercept with the x-axis of the complex impedance spectra. The mean resistances of the 2 samples, calculated as mean value of measures repeated in triple, are reported in Table 3 below. Values are similar for both compositions, indicating that no negative contribution is arising from the use of a polymer different from PTFE.

### Ionic resistance measurement

The electrical resistance measure of EC1 and CE1 was done in an EICel between two stainless steel plates (18 mm diameter) by wetting the discs with 0.5-0.6 ml of electrolyte and waiting 10 minutes to have wetting of the disc. A perturbation of 10mV rms at frequency from 1 Hz to 200 kHz is applied, recording 10 points per decade. The result of ionic resistance was taken from the intercept with the x-axis of the complex impedance spectra. The mean resistances of the 2 samples, calculated as mean value of measures repeated in triple, are reported in Table 3 below. Values are similar for both compositions.

**Table 3**

| | **Electrical resistance (Ω/mm)** | **Ionic resistance (Ω/mm)** |
|---|---|---|
| CE1 | 14,5081 | 1,80 |
| EC1 | 13,15 | 1,93 |

The data show that the binders of the present invention have improved adhesion to current collectors, while at the same time they keep good ionic and electric conductivity properties, so that they can be suitably used as binders for electrodes.

### Example 2: electrode preparation: composition of polymer (A-8) and PTFE-2 ratio 50/50

A dry mixture of 5.41 g of graphite, 1.36 g of silicon and 0.072 g of SC45 was prepared by grinding for 10 minutes the powders in an electric mortar. 5 ml of Galden HT80 was added to the powder mixture and the composite mixed in electric mortar for 1 minute. A homogeneous paste was obtained. 0.18 g of polymer (A-8) powder, 0.18 g of PTFE with 4 ml of Galden HT80 were added to the homogeneous paste and mixed in a mortar grinder for 5 min. A homogeneous composite was obtained.

The composite was then manipulated manually in order to fibrillate the polymer and obtain gross and cohese self-standing film.

Film was calendered to lower the thickness below 200 µm.

The resulting negative electrode had the following composition: 75.2 wt.% of graphite, 18.8 wt.% of silicon, 2.5 wt.% of polymer (A-8), 2.5% PTFE and 1 wt. % of carbon black.

Electrode EC2 was thus obtained.

The EC2 sample was placed between two copper current collectors and preheated at 150°C for 10 minutes in a press. Then 160 Bars was applied for 10 minutes to laminate EC2 onto current collector at a temperature of 150°C and at a pressure of 160 Bars. Press was then cooled down to room temperature without releasing the pressure.

### Adhesion assessment and measure

Adhesion assessment and measurements were carried out between the laminated sample as above specified and foil by following ASTM D 1876 on the 3 layer structure obtained after the lamination (metal foil/ film/metal foil). The adhesion levels are reported in Table 4. No adhesion was observed with PTFE powders when employed alone in the preparation of films by compression between two aluminum foils nor between two copper foils.

The peel strength was evaluated based on the following criteria. A larger value for the peel strength indicates better close adherence between the polymer and the current collector
A: Peel strength of at least 10.0 N/m
B: Peel strength of at least 2 N/m and less than 10.0 N/m
C: Adhesion obtained, difficult to measure due to rigidity of specimen
D: No adhesion

**Table 4**

| | Adhesion level to Cu |
|---|---|
| PTFE-2 | D |
| EC2 | A |

### Cathode preparation (NMC/C65/binder)

Cathodes were produced by a two-step process with binder compositions comprising of any of the polymers (A-2), (A-3), (A-6), (A-7) or (A-8) and PTFE-1.

The first step was a dry blending of the powders in a planetary mixer (speed mixer), by first mixing together NMC111 and C65 at high velocity for 10'. Afterwards, the polymer blend PTFE-1/polymer was added to the mixture and blended in the same mixer at lower velocity for 2'. The resulting mixer was poured into an agate mortar (heated up at 90°C) and shear was applied to the mixture for around 5'. The mixture resulted in a "pre-film" having dimensions ~50 x 20 x 2 mm (I x L x t).

The second step was a hot-rolling step in a 2-roll calender (Collin W100 T) heated at 90°C or 180°C (different fibrillation temperature). Calender rolls having a 1.2 to 1 speed ratio were used. The main roll was driven at a rotational speed of 2 rpm and the second roll at a speed of 2.4 rpm. The material was introduced and processed 5 times into the calender, reducing the gap stepwise from 2000 µm to 250 µm to apply progressive shearing forces onto the membrane thus avoiding excessive increment in terms of compaction forces. At each step the gap became about 75% of the previous gap. Once the smallest calendar gap was reached (250 µm), the membrane was folded in 4 and rotated 90° before being inserted and processed again into the calender according to the same methodology, now starting from 1000 µm and going down to 250 µm in around 6-7 reduction passages. As a result, a self-standing membrane of around 250 µm was obtained. The thickness of the cathodes produced by this process were further reduced using another calendering machine (GK300L Saueressig). This second calendering machine having 2 rolls rotating at the same speed but allowing a gap between the rolls as low as 50 µm. Targeted thickness of 90 µm was reached. The reduction of the thickness was executed without any use of solvent, making the process an "all-dry-process".

The cathodes were then co-laminated onto an aluminium sheet being 20 µm thick, at a temperature of 180°C and a pressure of 25 bars in a GK300L Saueressig calender.

### Adhesion of Cathodes onto AI current collector (Peeling test)

The adhesion strength of the positive electrode to the Al current collector was evaluated using a 180° peel test. An electrode strip (2 cm*10 cm) of the dried electrode was fixed with the electrode facing down and the current collector facing up on a rigid Al plate (2.6 cm*10 cm) using a double sided tape (width 25 mm; thickness 0.24 mm). The Al current collector was peeled off from the electrode using a motorized tension/compression force test stand (ESM303 from Mark-10 Corporation), maintaining an angle of 180° and at a constant speed of 300 mm/min. The force needed to remove the Al current collector from the electrode was recorded in Table 5 as an average value of 3 independent strips, generated from 3 independent electrodes using 3 independent slurries with the same composition. Peel-off tests were performed in a dry room with dew point of -40°C.

**Table 5**

| **PTFE** | **polymer** | **Electrode** | **% Additive in blend in PTFE** | **Peeling strength (N/m)** | |
|---|---|---|---|---|---|
| | | | | **Fibrillation at 90°C** | **Fibrillation at 180°C** |
| PTFE-1 | polymer (A-2) | EC3 | 20 | 16.7±12.8 | 37.4±9.7 |
| PTFE-1 | polymer (A-3) | EC4 | 20 | 35.6±10.0 | 43.4±5.3 |
| PTFE-1 | polymer (A-6) | EC5 | 20 | 31.9±15.6 | 36.6±14.9 |
| PTFE-1 | polymer (A-7) | EC6 | 20 | 59.5±4.7 | 43.3±10.74 |
| PTFE-1 | polymer (A-8) | EC7 | 20 | 27.3±3.0 | |
| PTFE-1 | n.d. | CE2 | - | 7.3±9.7 | 13.2±5.6 |

In all positive electrodes of EC3 to EC7, outstanding adhesion properties towards the Al current collector were clearly observed, distinguishable from that of CE2.

In addition, the data in Table 5 demonstrate that an additional advantage on the adhesion to current collector is obtained by reducing the particle size of the additive, with improved peeling strength and reduced variability. Also visually, it is evident that the electrodes obtained with a smaller particle size additive are more homogeneous.

In contrast, additives with higher melting temperature behaves slightly worse, in terms of adhesion, than the comparable additives having lower melting temperature.

The data also show that higher fibrillation temperature yields higher adhesion.

### Capacity Retention Testing

Manufacture of Batteries:
Pat cells (EL-Cell GmbH) were prepared by punching a small disk of the positive electrode prepared according to CE2, EC3, EC6 and EC7 together a balanced graphite anode disk (graphite 4.5 mAh/cm² purchased from NEI - Nanomyte^{®} BE-200E). The electrolyte used in the preparation of the coin cells was a mixture of 1M LiPF₆ solution in EC/DMC 1/1 v/v, from Sigma Aldrich; polyethylene separators (commercially available from Tonen Chemical Corporation) were used as received.

Full cell cycling stability at 1C C-rate (Open capacities were measured in duplicate, and are shown in Table 6 below):

**Table 6**

| **Electrode** | **Capacity 1^{st} formation cycle @C/20 (mAh/g)** | **Capacity retention 1 cycle (mAh/g)** | **Capacity retention after 50 cycles (mAh/g)** |
|---|---|---|---|
| **CE2** | **170** | **108** | **64** |
| **EC3** | **169** | **142** | **126** |
| **EC6** | **173** | **143** | **129*** |
| **EC7** | **174** | **143** | **142*** |

| | | | |
|---|---|---|---|
| *one cell only | | | |

The results in Table 6 show that the electrodes according to the present invention have a better cycling stability than the electrodes comprising PTFE only.

## Claims

1. A binder composition [binder (B)] for use in the preparation of electrodes for electrochemical devices, **characterized by** comprising:
a. a polytetrafluoroethylene (PTFE); and
b. a low melting point VDF-based fluororesin [polymer (A)] having a melting point of less than 220 °C, determined as described in the description, said polymer (A) comprising:
- at least 50% by moles of recurring units derived from VDF, with respect to all recurring units of said polymer (A), and
- recurring units derived from at least one comonomer (CM), said comonomer (CM) being selected from a hydrophilic (meth)acrylic comonomer [comonomer (MA)] and a fluorinated comonomer [comonomer (F)] selected from the group consisting of:
(i) tetrafluoroethylene (TFE);
(ii) chloro- and/or bromo- and/or iodo-C₂-C₆ fluoroolefins such as chlorotrifluoroethylene (CTFE);
(iii) (per)fluoroalkylvinylethers of formula CF₂=CFOR_{f1}, wherein R_{f1} is a C₁-C₆ fluoro- or perfluoroalkyl group, e.g. -CF₃, -C₂F₅, -C₃F₇; and
(iv) hexafluoropropylene (HFP),
wherein the at least one comonomer (F) is present in polymer (A) in an amount of from 0.05% to 30.0% by moles with respect to the total moles of recurring units of polymer (A).

2. The binder (B) according to claim 1, wherein polymer (A) comprises at least 60% by moles, more preferably at least 70% by moles of recurring units derived from VDF with respect to all recurring units of said polymer (A).

3. The binder (B) according to anyone of claims 1 or 2, wherein the weight ratio PTFE/polymer (A) is comprised between 95/5 wt/wt to 30/70 wt/wt.

4. The binder (B) according to anyone of the preceding claims, wherein the comonomer (MA) complies with formula: 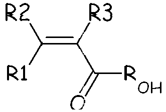 wherein each of R1, R2, R3, equal or different from each other, is independently an hydrogen atom or a C₁-C₃ hydrocarbon group, and R_{OH} is a hydroxyl group or a C₁-C₅ hydrocarbon moiety comprising at least one hydroxyl group.

5. The binder (B) according to claim 4, wherein the comonomer (MA) is selected from the group consisting of:
- hydroxyethylacrylate (HEA) of formula: 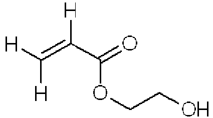
- 2-hydroxypropyl acrylate (HPA) of either of formulae: 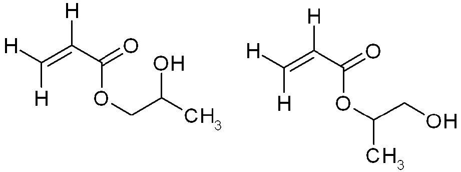
- acrylic acid (AA) of formula: 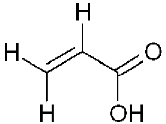 and mixtures thereof.

6. The binder (B) according to claim 5, wherein polymer (A) is a VDF-AA copolymer.

7. The binder (B) according to anyone of the claims 1 to 3, wherein polymer (A) is selected from VDF-CTFE copolymers, VDF-TFE copolymers, VDF-HFP copolymers or VDF/TFE/PMVE terpolymers.

8. An electrode-forming composition [composition (C)] for use in the preparation of electrodes for electrochemical devices, **characterized by** comprising:
a) at least one electrode active material (AM);
b) a binder (B) according to anyone of claims 1 to 7; and
c) optionally, at least one conductive agent.

9. A process for manufacturing an electrode [electrode (E)] for electrochemical cell, said process comprising:
- A) combining a polytetrafluoroethylene (PTFE) and a low melting point VDF-based fluororesin [polymer (A)] to provide a binder (B) according to anyone of claims 1 to 7;
- B) dry mixing the at least one electrode active material (AM), the binder (B) as above defined, and optionally, at least one conductive agent in the absence of solvent;
- C) feeding the powdered dry mixture obtained in step B) to a compactor to form a self-supporting dry film; and
- D) applying the dry film to an electrically conductive substrate to form the electrode.

10. The process according to claim 9, wherein in step B) the dry mixing carried out, for example, in a mill, mixer or blender until a uniform dry mixture is formed.

11. The process according to claim 9, wherein step C) is carried out at a temperature not exceeding 200 °C, preferably at a temperature lower than 180 °C.

12. An electrode (E) for a secondary battery obtainable by the process according to anyone of claims 9 to 11.

13. An electrochemical device, such as a secondary battery, comprising at least one electrode (E) according to claim 12.

14. The electrochemical device according to claim 13, said electrochemical device being a secondary battery comprising:
- a positive electrode and a negative electrode,
wherein at least one of the positive electrode and the negative electrode is the electrode (E) according to claim 12.

15. The electrochemical device according to claim 14, said electrochemical device being a secondary battery comprising:
- a positive electrode and a negative electrode,
wherein the positive electrode is the electrode (E) according to claims 12.

## Patentansprüche

1. Bindemittelzusammensetzung [Bindemittel (B)] zur Verwendung bei der Herstellung von Elektroden für elektrochemische Vorrichtungen, **dadurch gekennzeichnet, dass** sie Folgendes umfasst:
a. ein Polytetrafluorethylen (PTFE) und
b. ein Fluorharz auf VDF-Basis mit niedrigem Schmelzpunkt [Polymer (A)] mit einem Schmelzpunkt von weniger als 220 °C, bestimmt wie in der Beschreibung beschrieben, wobei das Polymer (A) Folgendes umfasst:
- mindestens 50 Mol-% Wiederholungseinheiten, die sich von VDF ableiten, bezogen auf alle Wiederholungseinheiten des Polymers (A), und
- Wiederholungseinheiten, die sich von mindestens einem Comonomer (CM) ableiten, wobei das Comonomer (CM) ausgewählt ist aus einem hydrophilen (Meth)acryl-Comonomer [Comonomer (MA)] und einem fluorierten Comonomer [Comonomer (F)], ausgewählt aus der Gruppe bestehend aus:
(i) Tetrafluorethylen (TFE);
(ii) Chlor- und/oder Brom- und/oder Iod-C₂-C₆-fluorolefinen wie Chlortrifluorethylen (CTFE);
(iii) (Per)fluoralkylvinylethern der Formel CF₂=CFOR_{f1}, wobei R_{f1} für eine C₁-C₆-Fluor- oder Perfluoralkylgruppe, z. B. -CF₃, -C₂F₅, -C₃F₇, steht; und
(iv) Hexafluorpropylen (HFP),
wobei das mindestens eine Comonomer (F) in Polymer (A) in einer Menge von 0,05 bis 30,0 Mol-%, bezogen auf die gesamten Mole von Wiederholungseinheiten von Polymer (A), vorliegt.

2. Bindemittel (B) nach Anspruch 1, wobei Polymer (A) mindestens 60 Mol-%, weiter bevorzugt mindestens 70 Mol-%, Wiederholungseinheiten, die sich von VDF ableiten, bezogen auf alle Wiederholungseinheiten des Polymers (A), umfasst.

3. Bindemittel (B) nach Anspruch 1 oder 2, wobei das Gewichtsverhältnis PTFE/Polymer (A) zwischen 95/5 Gew./Gew. bis 30/70 Gew./Gew. beträgt.

4. Bindemittel (B) nach einem der vorhergehenden Ansprüche, wobei das Comonomer (MA) der folgenden Formel entspricht: 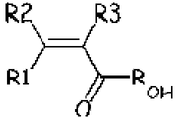 wobei R1, R2, R3 jeweils gleich oder voneinander verschieden sind und unabhängig für ein Wasserstoffatom oder eine C₁-C₃-Kohlenwasserstoffgruppe stehen und R_{OH} für eine Hydroxylgruppe oder C₁-C₅-Kohlenwasserstoffgruppierung mit mindestens einer Hydroxylgruppe steht.

5. Bindemittel (B) nach Anspruch 4, wobei das Comonomer (MA) ausgewählt ist aus der Gruppe bestehend aus:
- Hydroxyethylacrylat (HEA) der Formel: 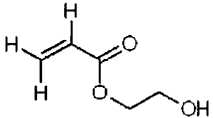
- 2-Hydroxypropylacrylat (HPA) einer der Formeln: 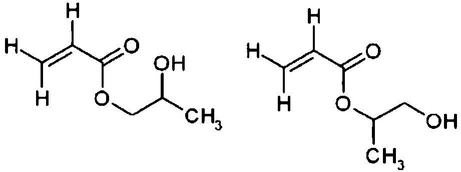
- Acrylsäure (AA) der Formel: 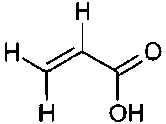 und Mischungen davon.

6. Bindemittel (B) nach Anspruch 5, wobei es sich bei Polymer (A) um ein VDF-AA-Copolymer handelt.

7. Bindemittel (B) nach einem der Ansprüche 1 bis 3, wobei Polymer (A) aus VDF-CTFE-Copolymeren, VDF-TFE-Copolymeren, VDF-HFP-Copolymeren oder VDF/TFE/PMVE-Terpolymeren ausgewählt ist.

8. Elektrodenbildende Zusammensetzung [Zusammensetzung (C)] zur Verwendung bei der Herstellung von Elektroden für elektrochemische Vorrichtungen, **dadurch gekennzeichnet, dass** sie Folgendes umfasst:
a) mindestens ein Elektrodenaktivmaterial (AM);
b) ein Bindemittel (B) nach einem der Ansprüche 1 bis 7; und
c) gegebenenfalls mindestens ein leitendes Mittel.

9. Verfahren zum Herstellen einer Elektrode [Elektrode (E)] für eine elektrochemische Zelle, wobei das Verfahren Folgendes umfasst:
- A) Vereinigen eines Polytetrafluorethylens (PTFE) und eines Fluorharzes auf VDF-Basis mit niedrigem Schmelzpunkt [Polymer (A)] zur Bildung eines Bindemittels (B) nach einem der Ansprüche 1 bis 7;
- B) Trockenmischen des mindestens einen Elektrodenaktivmaterials (AM), des Bindemittels (B) gemäß obiger Definition und gegebenenfalls mindestens eines leitenden Mittels in Abwesenheit von Lösungsmittel;
- C) Zuführen der in Schritt B) erhaltenen pulverförmigen Trockenmischung zu einem Verdichter zur Bildung eines selbsttragenden trockenen Films; und
- D) Aufbringen des trockenen Films auf ein elektrisch leitendes Substrat zur Bildung der Elektrode.

10. Verfahren nach Anspruch 9, wobei in Schritt B) das Trockenmischen beispielsweise in einer Mühle, einem Mischer oder einem Blender bis zur Bildung einer einheitlichen trockenen Mischung durchgeführt wird.

11. Verfahren nach Anspruch 9, wobei Schritt C) bei einer Temperatur von nicht mehr als 200 °C, vorzugsweise bei einer Temperatur von weniger als 180 °C, durchgeführt wird.

12. Elektrode (E) für eine Sekundärbatterie, erhältlich durch das Verfahren nach einem der Ansprüche 9 bis 11.

13. Elektrochemische Vorrichtung, wie Sekundärbatterie, umfassend mindestens eine Elektrode (E) nach Anspruch 12.

14. Elektrochemische Vorrichtung nach Anspruch 13, wobei es sich bei der elektrochemischen Vorrichtung um eine Sekundärbatterie handelt, die Folgendes umfasst:
- eine positive Elektrode und eine negative Elektrode, wobei es sich bei der positiven Elektrode und/oder der negativen Elektrode um die Elektrode (E) nach Anspruch 12 handelt.

15. Elektrochemische Vorrichtung nach Anspruch 14, wobei es sich bei der elektrochemischen Vorrichtung um eine Sekundärbatterie handelt, die Folgendes umfasst:
- eine positive Elektrode und eine negative Elektrode, wobei es sich bei der positiven Elektrode um die Elektrode (E) nach Anspruch 12 handelt.

## Revendications

1. Composition de liant [liant (B)] pour une utilisation dans la préparation d'électrodes pour dispositifs électrochimiques, **caractérisée en ce qu'**elle comprend :
a. un polytétrafluoroéthylène (PTFE) ; et
b. une résine fluorée à base de VDF à bas point de fusion [polymère (A)] présentant une température de fusion inférieure à 220 °C, déterminée comme décrit dans la description, ledit polymère (A) comprenant :
- au moins 50 % en moles de motifs répétitifs dérivés du VDF par rapport à tous les motifs répétitifs dudit polymère (A), et
- des motifs répétitifs dérivés d'au moins un comonomère (CM), ledit comonomère (CM) étant choisi parmi un comonomère (méth)acrylique hydrophile [comonomère (MA)] et un comonomère fluoré [comonomère (F)] choisi dans un groupe constitué de :
(i) tétrafluoroéthylène (TFE) ;
(ii) chloro- et/ou bromo- et/ou iodo-C₂-C₆ fluorooléfines telles que le chlorotrifluoroéthylène (CTFE) ;
(iii) (per)fluoroalkylvinyléthers de la formule CF₂=CFOR_{f1}, dans laquelle R_{f1} est un groupe fluoro- ou perfluoroalkyle en C₁-C₆, par exemple -CF₃, -C₂F₅, -C₃F₇ ; et
(iv) hexafluoropropylène (HFP),
dans laquelle au moins un comonomère (F) est présent dans le polymère (A) en une quantité allant de 0,05 % à 30,0 % en moles par rapport au nombre total de moles des motifs répétitifs du polymère (A).

2. Liant (B) selon la revendication 1, dans lequel le polymère (A) comprend au moins 60 % en moles, plus préférablement au moins 70 % en moles de motifs répétitifs dérivés du VDF par rapport à tous les motifs répétitifs dudit polymère (A).

3. Liant (B) selon l'une quelconque des revendications 1 ou 2, dans lequel le rapport pondéral PTFE/polymère (A) est compris entre 95/5 en poids/poids et 30/70 en poids/poids.

4. Liant (B) selon l'une quelconque des revendications précédentes, dans lequel le comonomère (MA) est conforme à la formule : 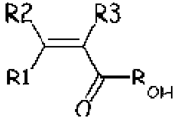 dans laquelle R1, R2 et R3, identiques ou différents les uns des autres, sont indépendamment un atome d'hydrogène ou un groupe hydrocarboné en C₁-C₃, et R_{OH} est un groupe hydroxyle ou un groupement hydrocarboné en C₁-C₃ comprenant au moins un groupe hydroxyle.

5. Liant (B) selon la revendication 4, dans lequel le comonomère (MA) est choisi dans un groupe constitué de :
- acrylate d'hydroxyéthyle (HEA) de la formule : 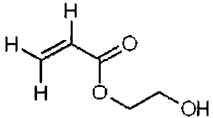
- acrylate de 2-hydroxypropyle (HPA) d'une des deux formules : 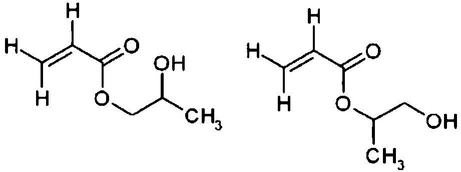
- acide acrylique (AA) de la formule : 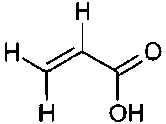 et des mélanges de ceux-ci.

6. Liant (B) selon la revendication 5, dans lequel le polymère (A) est un copolymère VDF-AA.

7. Liant (B) selon l'une quelconque des revendications 1 à 3, dans lequel le polymère (A) est choisi parmi des copolymères VDF-CTFE, des copolymères VDF-TFE, des copolymères VDF-HFP ou des terpolymères VDF/TFE/PMVE.

8. Composition de formation d'électrode [composition (C)] pour une utilisation dans la préparation d'électrodes pour des dispositifs électrochimiques, **caractérisée en ce qu'**elle comprend :
a) au moins un matériau actif d'électrode (AM) ;
b) un liant (B) selon l'une quelconque des revendications 1 à 7 ; et
c) éventuellement, au moins un agent conducteur.

9. Procédé pour la fabrication d'une électrode [électrode (E)] pour cellule électrochimique, ledit procédé comprenant :
- A) la combinaison d'un polytétrafluoroéthylène (PTFE) et d'une résine fluorée à base de VDF à bas point de fusion [polymère (A)] pour fournir un liant (B) selon l'une quelconque des revendications 1 à 7 ;
- B) le mélange à sec d'au moins un matériau actif d'électrode (AM), du liant (B) tel que défini ci-dessus, et éventuellement au moins un agent conducteur en l'absence de solvant ;
- C) l'alimentation du mélange sec en poudre obtenu à l'étape B) dans un compacteur pour former un film sec autoportant ; et
- D) l'application du film sec sur un substrat électriquement conducteur pour former l'électrode.

10. Procédé selon la revendication 9, dans lequel, à l'étape B), le mélange à sec est effectué, par exemple, dans un broyeur, un mélangeur ou un mixeur jusqu'à formation d'un mélange sec uniforme.

11. Procédé selon la revendication 9, dans lequel l'étape C) est effectuée à une température ne dépassant pas 200 °C, de préférence à une température inférieure à 180 °C.

12. Électrode (E) pour une batterie secondaire pouvant être obtenue par le procédé selon l'une quelconque des revendications 9 à 11.

13. Dispositif électrochimique, tel qu'une batterie secondaire, comprenant au moins une électrode (E) selon la revendication 12.

14. Dispositif électrochimique selon la revendication 13, ledit dispositif électrochimique étant une batterie secondaire comprenant :
- une électrode positive et une électrode négative,
dans lequel au moins une électrode positive ou une électrode négative est l'électrode (E) selon la revendication 12.

15. Dispositif électrochimique selon la revendication 14, ledit dispositif électrochimique étant une batterie secondaire comprenant :
- une électrode positive et une électrode négative,
dans lequel l'électrode positive est l'électrode (E) selon la revendication 12.
